# EUROPEAN PATENT APPLICATION

(11) **EP 3 998 128 A1**
(43) Date of publication of application: **18.05.2022**
(21) Application number: 20864184.5
(22) Date of filing: 26.08.2020
(51) Int. Cl.: B23B 27/14, B23B 27/16

(54) **CUTTING INSERT**

(30) Priority: 10.09.2019 KR 20190112132
(71) Applicant: YG-1 Co., Ltd., Incheon 21300 (KR)
(72) Inventor: PARK, Guen Woo, Cheongju-si, Chungcheongbuk-do 28636 (KR); ANTON, Babushkin, Oakville, Ontario L6L3L7 (CA); HAM, Tae Sun, Chungju-si, Chungcheongbuk-do 27351 (KR); AN, Sung Jun, Chungju-si, Chungcheongbuk-do 27372 (KR)
(74) Representative: Werhahn, Jasper Carl
(86) International application number: PCT/KR2020/011389
(87) International publication number: WO 2021/049786

(57) **Abstract**

The present invention relates to a cutting insert that is interchangeably mounted in an insert pocket formed at an end portion of a cutting tool and is capable of cutting a workpiece, wherein the cutting insert may comprise: a top portion; a bottom portion formed to face the top portion; a pair of sub side portions for connecting widthwise end portions of the top portion and the bottom portion; a pair of main side portions for connecting longitudinal end portions of the top portion and the bottom portion; a plurality of corner side portions for connecting the pair of sub side portions and the pair of main side portions in a curved shape; a through-hole portion formed to penetrate the central portion of the top portion and the bottom portion; and a cutting portion formed in at least a part of a portion where the pair of sub side portions, the pair of main side portions, and the plurality of corner side portions intersect the top portion and the bottom portion.

## Description

### [Technical Field]

The present disclosure relates to a cutting insert, and more particularly, to a cutting insert that is mounted in an insert pocket formed at an end of a cutting tool to be replaced in order to cut a workpiece.

### [Background Art]

A cutting tool is a tool that is coupled to a general or dedicated machine tool that performs a cutting operation to be used to cut or shear a metal through rotation thereof, and as a representative example, includes a cutting bite that is widely used in a machine tool, such as a lathe or a milling machine.

In general, as a cutting tool, an edge exchangeable rotary cutting tool, by which a cutting insert of a hard metal including a cutting edge at one side thereof may be freely attached to an insert pocket formed at a tip end of the tool body by using a clamping screw, has been practical. A plurality of cutting inserts are mounted on the edge exchangeable rotary cutting tool, it is possible to cut a workpiece, such as steel or cast iron, at a high performance in a high-feed cutting condition.

### [Disclosure]

### [Technical Problem]

However, the conventional cutting insert is easily damaged because a high cutting load (cutting resistance) is applied to the cutting insert due to a high feeding speed in a high-feed area. Furthermore, when cutting chips are generated during the cutting, the cutting insert is interfered by curling of the cutting chips so that cutting efficiency deteriorates as the cutting chips are inserted between the cutting insert and the workpiece or may not be smoothly discharged. Accordingly, the quality of the machined surface of the workpiece, which is cut by the cutting insert, deteriorates and the lifespan of the cutting insert also deteriorates.

An aspect of the present disclosure provides a cutting insert which may cut a workpiece, such as steel or cast iron at a high performance in a high-feed cutting condition, by improving the discharge flows of the cutting chips by reinforcing the strength of the cutting insert mounted in the insert pocket of the cutting tool and smoothly guiding the flows of the cutting chips, thereby improving the discharge performance of the cutting chips. However, the object of the present disclosure is exemplary, and the scope of the present disclosure is not limited thereto.

### [Technical Solution]

An embodiment of the present disclosure provides a cutting insert. The cutting insert may include an upper surface, a lower surface formed to be opposite to the upper surface, a pair of sub-side surfaces connecting ends of the upper surface and the lower surface in a widthwise direction thereof, a pair of main side surfaces connecting ends of the upper surface and the lower surface in a lengthwise direction thereof, a plurality of corner side surfaces connecting the pair of sub-side surfaces and the pair of main side surfaces in curved shapes, a through-hole formed to pass through the upper surface and the lower surface, and cutting portions formed at at least a portion of a part, in which the upper surface and the lower surface, the pair of sub-side surfaces, the pair of main side surfaces, and the plurality of corner side surfaces cross each other, and, on a plan view, in which the upper surface is a top surface thereof, the cutting portions include first corner cutting edges formed to extend along, among the plurality of corner side surfaces, first corner side surfaces, first cutting edges formed to extend from ends of the first corner cutting edges along the pair of main side surfaces in convex curved shapes, second cutting edges formed to extend from ends of the first cutting edges along the pair of main side surfaces in linear shapes, third cutting edges formed to extend from ends of the second cutting edges along the pair of main side surfaces in convex curved shapes of a radius of curvature that is the same as that of the first cutting edges, second corner cutting edges formed to extend from ends of the third cutting edges along, among the plurality of corner side surfaces, second corner side surfaces formed to be opposite to the first corner side surfaces in the widthwise direction, and fourth cutting edges formed to extend from opposite ends of the first corner cutting edges along the pair of sub-side surfaces in linear shapes.

According to an embodiment of the present disclosure, the pair of sub-side surfaces and the pair of main side surfaces may be formed in a direction that is perpendicular to the upper surface and the lower surface.

According to an embodiment of the present disclosure, the pair of main side surfaces may include first side surfaces formed along the first cutting edges in convex curved shapes, second side surfaces formed along the second cutting edges in flat surfaces, and formed in a direction that is perpendicular to the pair of sub-side surfaces, and third side surfaces formed along the third cutting edges in convex curved shape of a radius of curvature that is the same as that of the first side surfaces.

According to an embodiment of the present disclosure, on a side view, in which the pair of main side surfaces are side surfaces thereof, the cutting portions may be formed such that entire sections of the first corner cutting edges, the first cutting edges, and the second cutting edges, and partial sections of the third cutting edges, which are adjacent to the second cutting edges, are formed at locations that are higher than that of the upper surface, and other sections of the third cutting edges, which are adjacent to the second corner cutting edges, and entire sections of the second corner cutting edges are formed at locations that are lower than that of the upper surface.

According to an embodiment of the present disclosure, on a front view, in which the pair of sub-side surfaces are a front surface thereof, the cutting portion may be formed such that partial sections of the fourth cutting edges, which are adjacent to the first corner cutting edges, are formed at locations that are higher than that of the upper surface, and the remaining sections thereof are formed at locations that are lower than the upper surface.

According to an embodiment of the present disclosure, the fourth cutting edges may be formed to be inclined toward the upper surface at a specific angle as being farther away from opposite ends of the first corner cutting edges, and the specific angle is 7 degrees to 11 degrees.

According to an embodiment of the present disclosure, the upper surface may include a mounting surface formed around the through-hole to be a flat surface in a shape that surrounds the through-hole, and an inclined surface formed to be inclined from the mounting surface toward entire sections of the first corner cutting edges, the first cutting edges, and the second cutting edges, which are formed to be higher that the mounting surface, partial sections of the third cutting edges, which are adjacent to the second cutting edges, and partial sections of the fourth cutting edges, which are adjacent to the first corner cutting edges.

According to an embodiment of the present disclosure, the cutting portions may be formed such that land surfaces of the first cutting edges, the second cutting edges, the third cutting edges, the fourth cutting edges, the first corner cutting edges, and the second corner cutting edges are inclined at inclination angles that are different from that of the inclined surface.

According to an embodiment of the present disclosure, the cutting portions may be formed such that a width of the land surfaces of the fourth cutting edges is larger than widths of the land surfaces of the first cutting edges, the second cutting edges, and the third cutting edges.

According to an embodiment of the present disclosure, the upper surface may further include chip recesses formed around the second corner side surfaces to be recessed from the upper surface in a height direction.

According to an embodiment of the present disclosure, the chip recesses may be formed to be recessed from the mounting surface in the height direction in areas between the mounting surface, and other section of the third cutting edges, which are adjacent to the second corner cutting edges, and the entire sections of the second corner cutting edges.

According to an embodiment of the present disclosure, the cutting portions may be formed in a shape that is rotation-symmetrical by 180 degrees with respect to a central axis in the widthwise direction and a central axis in the lengthwise direction, and a central axis of the through-hole, and the lower surface may be formed in a shape that is rotation-symmetrical by 180 degrees to the upper surface with respect to the central axis in the widthwise direction and the central axis in the lengthwise direction.

According to an embodiment of the present disclosure, heights of the pair of sub-side surfaces and the pair of main side surfaces may be 48% to 52% of a distance between the second cutting edges formed to face each other on the upper surface.

According to an embodiment of the present disclosure, the first cutting edges and the third cutting edges may be formed in convex curved shapes that have radii of curvature of 4.5 mm to 6.5 mm.

### [Advantageous Effects]

According to the embodiment of the present disclosure, a support force against the cutting insert mounted in the insert pocket of the cutting tool may be increased, and the strength of the insert itself may be reinforced. Furthermore, the discharge performance of the cutting chips may be improved by forming the chip recess that improves the discharge flows of the cutting chips and smoothly guiding the flows of the cutting chips generated during the cutting.

Accordingly, it is possible to embody the cutting insert which enables the workpiece, such as steel or cast steel, may be cut at a high performance in a high-feed cutting condition while the lifespan of the cutting insert and the quality of the machined surface of the workpiece cut by the cutting insert are improved. Of course, the scope of the present disclosure is not limited by the effects.

### [Description of Drawings]

FIG. 1 is a perspective view schematically illustrating a cutting insert according to the embodiment of the present disclosure;
FIGS. 2 to 4 are cross-sectional views illustrating a side surface, a top surface, and a front surface of the cutting insert of FIG. 1;
FIG. 5 is a cross-sectional view illustrating a cross-section of the cutting insert, taken along cutting line V-V of FIG. 3; and
FIG. 6 is a cross-sectional view illustrating a partial cutting force generated in the cutting insert of FIG. 1 when the cutting insert is mounted on a cutting tool to machine a workpiece.

### [Mode for Invention]

Hereinafter, various embodiments of the present disclosure will be described in detail with reference to the accompanying drawings.

The embodiments of the present disclosure are provided to explain the present disclosure more fully to those skilled in the art, to which the present disclosure pertains, and the following embodiments may be modified to various other forms and the scope of the present disclosure is not limited by the following embodiments. Rather, the embodiments are provided to make the present disclosure fuller and more complete and to completely deliver the spirit of the present disclosure. Furthermore, the thicknesses and sizes of layers in the drawings are exaggerated for convenience of description and clarity.

Hereinafter, the embodiments of the present disclosure will be described with reference to the drawings that schematically illustrate ideal embodiments of the present disclosure. In the drawings, for example, modifications of the illustrated shape may be expected according to the manufacturing technologies and/or tolerances. Accordingly, the embodiments of the spirit of the present disclosure are not construed to be limited to the specific shapes of the areas illustrated in the specification, but have to include changes of the shapes caused during a manufacturing process.

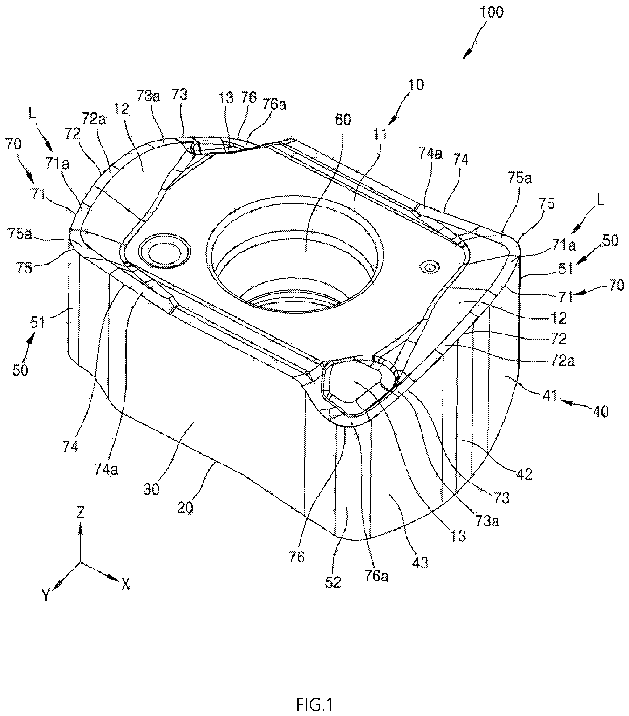

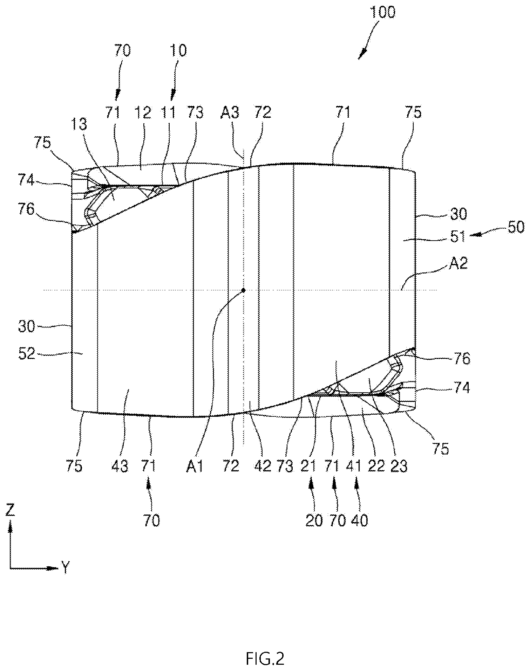

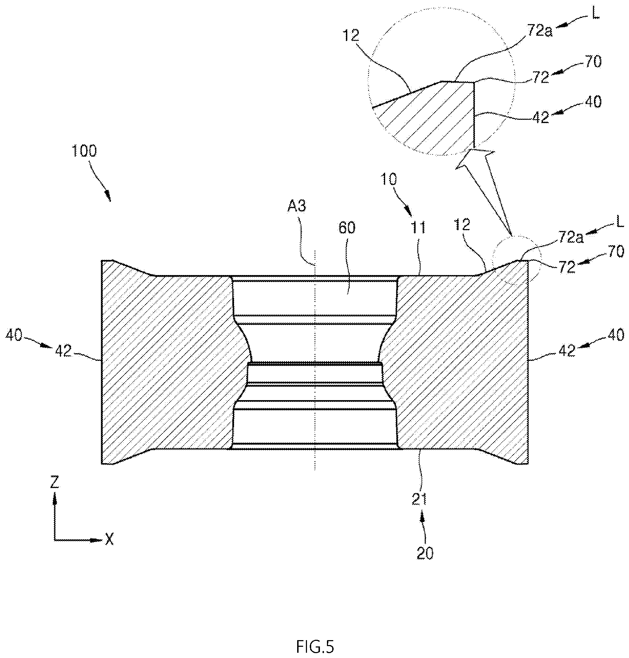

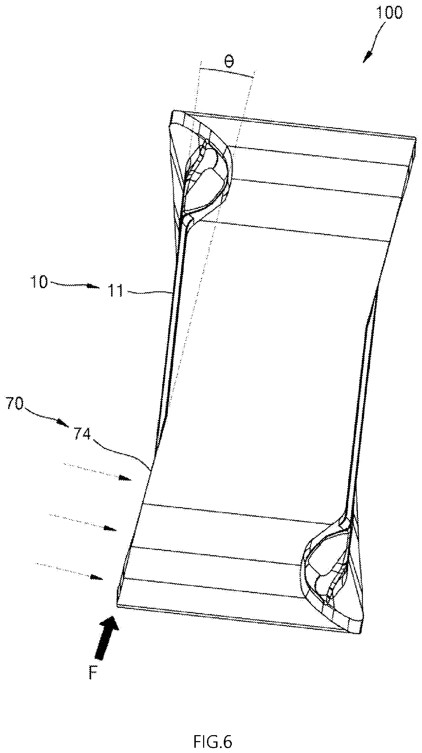

FIG. 1 is a perspective view schematically illustrating a cutting insert 100 according to the embodiment of the present disclosure. FIGS. 2 to 4 are cross-sectional views illustrating a side surface, a top surface, and a front surface of the cutting insert 100 of FIG. 1. FIG. 5 is a cross-sectional view illustrating a cross-section of the cutting insert 100, taken along cutting line V-V of FIG. 2. FIG. 6 is a cross-sectional view illustrating a partial cutting force generated in the cutting insert 100 of FIG. 1 when the cutting insert 100 is mounted on a cutting tool to machine a workpiece.

First, as illustrated in FIG. 1, a cutting insert 100 according to an embodiment of the present disclosure may largely include an upper surface 10, a lower surface 20, a pair of sub-side surfaces 30, a pair of main side surfaces 40, a plurality of corner side surfaces 50, a through-hole 60, and cutting portions 70.

As illustrated in FIG. 1 to 4, the cutting insert 100 may include the upper surface 10, the lower surface 20, and four side surfaces 30 and 40 that connect the upper surface 10 and the lower surface 20 such that the cutting insert 100 may have a substantially hexahedral shape.

In more detail, the upper surface 10, and the lower surface 20 that is formed to be opposite to the upper surface 10 of the cutting insert 100 may include mounting surfaces 11 and 21 that are formed around the through-hole 60 to be flat surfaces in shapes that surround the through-hole 60. For example, the mounting surface 11 of the upper surface 10 and the mounting surface 21 of the lower surface 20 may have flat surface shapes that act as seating surface, which is seated in an insert pocket of the cutting tool and are parallel to each other.

Furthermore, the upper surface 10 may include an inclined surface 12 formed to be inclined from the mounting surface 11 toward entire sections of first corner cutting edges 75, first cutting edges 71, and second cutting edges 72 of the cutting portions 70, which are formed to be higher that the mounting surface 11 and will be described below, partial sections of the third cutting edges 73, which are adjacent to the second cutting edges 72, and partial sections of the fourth cutting edges 74, which are adjacent to the first corner cutting edges 75.

In addition, the inclined surface 22 formed in the lower surface 20 may be formed in a shape that is rotation-symmetrical by 180 degrees to the inclined surface 12 of the upper surface 10. That is, the upper surface 10 and the lower surface 20 including the mounting surfaces 11 and 21 and the inclined surfaces 12 and 22 may have shapes that are rotation-symmetrical by 180 degrees with respect to a central axis A2 in the widthwise direction "Y" of the cutting insert 100 and a central axis A1 in the lengthwise direction A1 thereof, whereby the upper surface 10 may be seated in the insert pocket of the cutting tool when the cutting tool is used, and to the contrary, the lower surface 20 may be seated in the insert pocket when the cutting tool is used.

Then, the through-hole 60 may be formed to pass through central portions of the upper surface 10 and the lower surface 20 to perform a function of a clamping hole when the cutting insert 100 is coupled to the insert pocket of the cutting tool.

Furthermore, each of the pair of sub-side surfaces 30 may include a front surface and a rear surface that are formed to face each other to connect ends of the upper surface 10 and the lower surface 20 in the widthwise direction "Y", and each of the pair of main side surfaces 40 may include a left side surface and a right side surface that are formed to face each other to connect ends of the upper surface 10 and the lower surface 20 in the lengthwise direction "X". Then, the pair of sub-side surfaces 30 and the pair of main side surfaces 40 may be formed to be connected by a plurality of corner side surfaces 50 formed in curved shapes.

The pair of sub-side surfaces 30, the pair of main side surfaces 40, and the plurality of corner side surfaces 50 may be formed to be perpendicular to the upper surface 10 and the lower surface 20, and the cutting portions 70 that may cut the workpiece may be formed at at least a portion of a part, in which the upper surface 10, the lower surface 20, the pair of sub-side surfaces 30, the pair of main side surfaces 40, and the plurality of corner side surfaces 50 cross each other.

For example, on a plan view, in which the upper surface 10 is a top surface thereof, the cutting portions 70 may include first corner cutting edges 75 formed to extend along first corner side surfaces 51 of the plurality of corner side surfaces 50, first cutting edges 71 formed to extend from ends of the first corner cutting edges 75 along the pair of main side surfaces 40 in convex curved shapes having a radius of curvature of 4.5 mm to 6.5 mm, second cutting edges 72 formed to extend from ends of the first corner cutting edges 71 along the pair of main side surfaces 40 in linear shapes, third cutting edges 73 formed to extend from ends of the second cutting edges 72 along the pair of main side surfaces 40 in convex curved shapes of a radius of curvature that is the same as that of the first cutting edges, and second corner cutting edges 76 formed to extend from ends of the third cutting edges 73 along, among the plurality of corner side surfaces 50, second corner side surfaces 52 formed to be opposite to the first corner side surfaces 51 in the widthwise direction.

Then, the pair of main side surfaces 40 having the first cutting edges 71, the second cutting edges 72, and the third cutting edges 73 may include first side surfaces 41 formed along the first cutting edges 71 in convex curved shapes, second side surfaces 42 formed along the second cutting edges 72 in flat surfaces, and formed in a direction that is perpendicular to the pair of sub-side surfaces 30, and third side surfaces 43 formed along the third cutting edges 73 in convex curved shapes of a radius of curvature that is the same as that of the first side surfaces 41.

In more detail, as illustrated in FIG. 2, on a side view, in which the pair of main side surfaces 40 are side surfaces thereof, the cutting portions 70 may be formed such that entire sections of the first corner cutting edges 75, the first cutting edges 71, and the second cutting edges 72, and partial sections of the third cutting edges 73, which are adjacent to the second cutting edges 72, are formed at locations that are higher than that of the mounting surface 11 of the upper surface 10, and other sections of the third cutting edges 73, which are adjacent to the second corner cutting edges 76, and entire sections of the second corner cutting edges 76 are formed at locations that are lower than that of the mounting surface 11 of the upper surface 10.

Accordingly, on a side view, in which the pair of main side surfaces 40 are side surfaces, the first cutting edges 71 may be formed to be inclined from ends of the first corner cutting edges 75 upwards or parallel with respect to the mounting surface 11 of the upper surface 10, the second cutting edges 72 may be formed to be inclined in a direction that faces from ends of the first cutting edges 71 toward the mounting surface 11, the third cutting edges 73 may be formed to be inclined downwards with respect to the mounting surface 11 from ends of the second cutting edges 72 to the second corner cutting edges 76 that are formed to be lower than the mounting surface 11 whereby partial sections thereof area formed to be at locations that are higher than that of the mounting surface and partial sections thereof are formed at locations that are lower than that of the mounting surface 11.

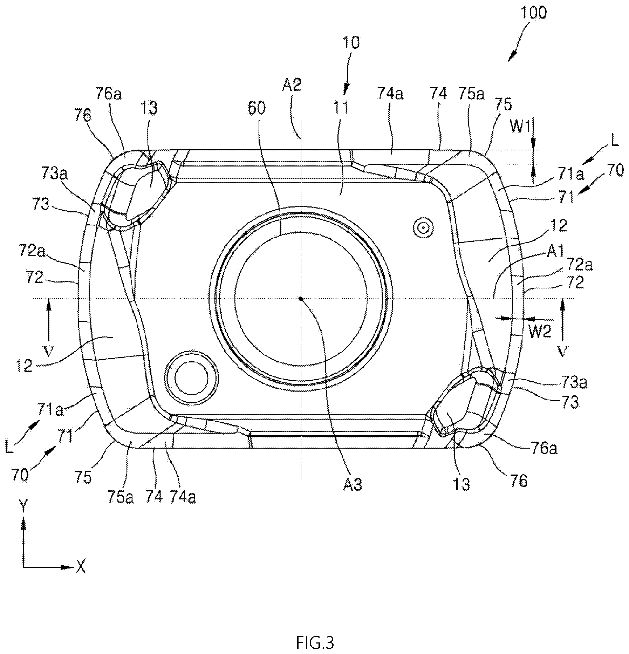

Then, as illustrated in FIGS. 3 to 5, land surfaces 71a, 72a, 73a, 75a, and 76a of the first cutting edges 71, the second cutting edges 72, the third cutting edges 73, the first corner cutting edges 75, and the second cutting edges 76 may be inclined at inclination angles that are different from that of the inclined surface 12 in an opposite direction to the inclined surface 12. However, the present disclosure is not limited thereto, and the land surfaces 71a, 72a, 73a, 75a, and 76a may be inclined at inclination angles that are different from that of the inclined surface 12 of the upper surface 10 in the same direction as the inclined surface 12

Accordingly, the cutting portions 70 may be one cutting edge, in which the first cutting edges 71 that extend from ends of the first corner cutting edges 75 to have convex curved shapes, the second cutting edges 72 that extends to have linear shapes, the third cutting edges 73 that extends to have convex curved shapes, and the second corner cutting edges 76 are sequentially arranged and connected. Here, the first cutting edges 71 having curved shapes may act as main cutting edges, the second cutting edges 72 having linear shapes may act as both main cutting edges and minor cutting edges, and the remaining cutting edges may act as minor cutting edges.

In this way, the first cutting edges 71, the second cutting edges 72, and the third cutting edges 73 that constitute the cutting portions 70 may prevent ends of the cutting edges from proactively consumed, and the cutting performance of the cutting portions may be maintained for a long time as the shapes of the cutting portions 70 are maintained for a long time.

Furthermore, land parts "L" of the cutting portions 70 may be inclined at angles that are different from that of the inclined surface 12 of the upper surface 10 in an opposite direction or in the same direction, and the second cutting edges 72 and the third cutting edges 73 are inclined downwards from the first cutting edges 71 that act as main cutting edges of the cutting portions 70 toward the second corner cutting edges 76 whereby cutting chips generated by the first cutting edges 71 may be discharged in the directions of the second corner cutting edges 76 along the inclined surface 12 via the second cutting edges 72 and the third cutting edges 73.

Then, chip recesses 13 that are recessed from the upper surface 10 in the height direction "Z" may be formed around the second corner side surfaces 52 of the upper surface 10 such that the cutting chips may be discharged more easily.

The chip recesses 13 are formed to be recessed from the mounting surface 11 in the height direction "Z" in areas between the mounting surface 11 and other sections of the third cutting edges 73, which are adjacent to the second corner cutting edges 76 and the entire sections of the second corner cutting edges 76 whereby the cutting chips discharged in the directions of the second corner cutting edges 76 may be easily discharged to the outside of the cutting insert 100 easily.

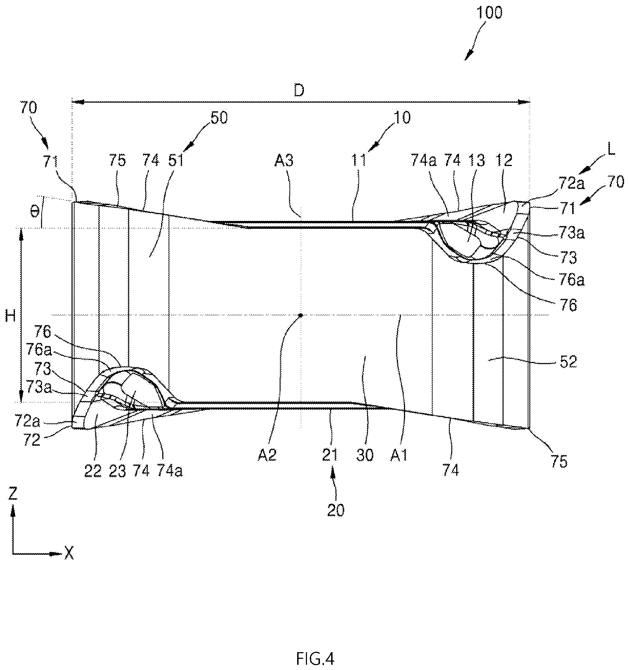

Furthermore, as illustrated in FIGS. 3 and 4, the cutting portions 70 may further include fourth cutting edges 74 formed to extend from opposite ends of the first corner cutting edges 75 along the pair of sub-side surfaces 30 in linear shapes.

In more detail, the fourth cutting edges 74, as illustrated in FIG. 3, on a plan view, in which the upper surface 10 is a top surface, the width W1 of the land surface 74a formed to be inclined at an angle that is different from the inclined surface 12 of the upper surface 10 may be larger than the width W2 of the land surfaces 71a, 72a, and 73a of the first cutting edges 71, the second cutting edges 72, and the third cutting edges 73.

Further, the fourth cutting edges 74, as illustrated in FIG. 4, on a front view, in which the pair of sub-side surfaces 30 are a front surface thereof, partial sections of the fourth cutting edges 74, which are adjacent to the first corner cutting edges 75, may be formed at a location that is higher than the mounting surface 11 of the upper surface 10, and the remaining sections thereof may be formed at a location that is lower than the mounting surface 11.

Accordingly, the fourth cutting edges 74 may be formed to be inclined from opposite ends of the first corner cutting edges 75 in directions that face the upper surface 10. That is, the fourth cutting edges 74 may be formed to be inclined toward the upper surface 10 at a specific angle θ as it goes in a direction that is farther from the opposite ends of the first corner cutting edges 75. Then, the specific angle θ may be 7 degrees to 11 degrees, and among them, may be preferably 9 degrees.

According to the configuration, the fourth cutting edges 74 also may function as a supporting portion that supports the cutting insert 100. In more detail, as illustrated in FIG. 6, the fourth cutting edges 74 formed to be inclined at the specific angle θ with respect to a partial cutting force "F" generated when the cutting insert 100 mounted on the cutting tool cuts the workpiece may function as the supporting portion that supports the cutting insert 100.

Accordingly, the cutting insert 100 may be firmly supported by the cutting tool so that the strength of the cutting insert 100 may be reinforced, and thus, a high-feed is appliable and productivity may be increased. Furthermore, because the cutting insert 100 is firmly supported by the cutting tool, the cutting insert 100 may be prevented from being vibrated during the cutting and an excellent roughness may be obtained on the machined surface of the workpiece whereby the quality of the cutting may be improved.

Furthermore, the cutting portions 70 including the first corner cutting edges 75, the second corner cutting edges 76, the first cutting edges 71, the second cutting edges 72, the third cutting edges 73, and the fourth cutting edges 74 may be formed on the upper surface 10 and the lower surface 20 in shapes that are rotation-symmetrical by 180 degrees with respect to the central axis A2 in the widthwise direction "Y" of the cutting insert 100 and the central axis A1 in the lengthwise direction "X", and the central axis A3 of the through-hole 60.

In this way, the cutting portions 70 are formed in the shape that is rotation-symmetrical by 180 degrees with respect to the central axes A1, A2, and A3 of the cutting insert 100 whereby the cutting portions 70 of the same shape may be maintained regardless of in which direction the cutting insert 100 is seated in the insert pocket of the cutting tool.

Furthermore, as illustrated in FIG. 4, the heights of the pair of sub-side surfaces 30 and the pair of main side surfaces 40 may be between 48% to 52% of the distance D between the second cutting edges 72 formed to face the upper surface 10, and may be most preferably 49% in the range.

That is, the thickness of the cutting insert 100 may be formed to have a thickness of 48% to 52% of the total length thereof, and thus may be formed to have a thickness that is thicker than a conventional cutting insert. Accordingly, the strength of the cutting insert 100 may be reinforced by the relatively large thickness thereof, and may be prevented from being damaged under a high-feed condition whereby the lifespan of the tool may be improved.

Although one embodiment has been described above with reference to the accompanying drawings, it should be understood that this embodiment is given by way of illustration only, and that various modifications, variations, and alterations can be made without departing from the spirit and scope of the present disclosure. Hence, the true technical scope of the present disclosure will be determined by the technical spirit of the claims.

### [Industrial Applicability]

According to the embodiment of the present disclosure, a support force against the cutting insert mounted in the insert pocket of the cutting tool may be increased, and the strength of the insert itself may be reinforced. Furthermore, the discharge performance of the cutting chips may be improved by forming the chip recesses that improve the discharge flows of the cutting chips and smoothly guiding the flows of the cutting chips generated during the cutting.

Accordingly, because the workpiece, such as steel or cast iron, may be cut at a high performance in a high-feed cutting condition while the lifespan of the cutting insert and the quality of the machined surface of the workpiece cut by the cutting insert are improved, the cutting costs may be reduced.

## Claims

1. A cutting insert comprising:
an upper surface;
a lower surface formed to be opposite to the upper surface;
a pair of sub-side surfaces connecting ends of the upper surface and the lower surface in a widthwise direction thereof;
a pair of main side surfaces connecting ends of the upper surface and the lower surface in a lengthwise direction thereof;
a plurality of corner side surfaces connecting the pair of sub-side surfaces and the pair of main side surfaces in curved shapes;
a through-hole formed to pass through the upper surface and the lower surface; and
cutting portions formed at at least a portion of a part, in which the upper surface and the lower surface, the pair of sub-side surfaces, the pair of main side surfaces, and the plurality of corner side surfaces cross each other, and
wherein, on a plan view, in which the upper surface is a top surface thereof, the cutting portions include:
first corner cutting edges formed to extend along, among the plurality of corner side surfaces, first corner side surfaces;
first cutting edges formed to extend from ends of the first corner cutting edges along the pair of main side surfaces in convex curved shapes;
second cutting edges formed to extend from ends of the first cutting edges along the pair of main side surfaces in linear shapes;
third cutting edges formed to extend from ends of the second cutting edges along the pair of main side surfaces in convex curved shapes of a radius of curvature that is the same as that of the first cutting edges;
second corner cutting edges formed to extend from ends of the third cutting edges along, among the plurality of corner side surfaces, second corner side surfaces formed to be opposite to the first corner side surfaces in the widthwise direction; and
fourth cutting edges formed to extend from opposite ends of the first corner cutting edges along the pair of sub-side surfaces in linear shapes.

2. The cutting insert of claim 1, wherein the pair of sub-side surfaces and the pair of main side surfaces are formed in a direction that is perpendicular to the upper surface and the lower surface.

3. The cutting insert of claim 2, wherein the pair of main side surfaces include:
first side surfaces formed along the first cutting edges in convex curved shapes;
second side surfaces formed along the second cutting edges in flat surfaces, and formed in a direction that is perpendicular to the pair of sub-side surfaces; and
third side surfaces formed along the third cutting edges in convex curved shape of a radius of curvature that is the same as that of the first side surfaces.

4. The cutting insert of claim 1, wherein on a side view, in which the pair of main side surfaces are side surfaces thereof, the cutting portions are formed such that entire sections of the first corner cutting edges, the first cutting edges, and the second cutting edges, and partial sections of the third cutting edges, which are adjacent to the second cutting edges, are formed at locations that are higher than that of the upper surface, and other sections of the third cutting edges, which are adjacent to the second corner cutting edges, and entire sections of the second corner cutting edges are formed at locations that are lower than that of the upper surface.

5. The cutting insert of claim 4, wherein on a front view, in which the pair of sub-side surfaces are a front surface thereof, the cutting portion are formed such that partial sections of the fourth cutting edges, which are adjacent to the first corner cutting edges, are formed at locations that are higher than that of the upper surface, and the remaining sections thereof are formed at locations that are lower than the upper surface.

6. The cutting insert of claim 5, wherein the fourth cutting edges are formed to be inclined toward the upper surface at a specific angle as being farther away from opposite ends of the first corner cutting edges, and the specific angle is 7 degrees to 11 degrees.

7. The cutting insert of claim 5, wherein the upper surface includes:
a mounting surface formed around the through-hole to be a flat surface in a shape that surrounds the through-hole; and
an inclined surface formed to be inclined from the mounting surface toward entire sections of the first corner cutting edges, the first cutting edges, and the second cutting edges, which are formed to be higher that the mounting surface, partial sections of the third cutting edges, which are adjacent to the second cutting edges, and partial sections of the fourth cutting edges, which are adjacent to the first corner cutting edges.

8. The cutting insert of claim 7, wherein the cutting portions are formed such that land surfaces of the first cutting edges, the second cutting edges, the third cutting edges, the fourth cutting edges, the first corner cutting edges, and the second corner cutting edges are inclined at inclination angles that are different from that of the inclined surface.

9. The cutting insert of claim 8, wherein the cutting portions are formed such that a width of the land surfaces of the fourth cutting edges is larger than widths of the land surfaces of the first cutting edges, the second cutting edges, and the third cutting edges.

10. The cutting insert of claim 7, wherein the upper surface further includes:
chip recesses formed around the second corner side surfaces to be recessed from the upper surface in a height direction.

11. The cutting insert of claim 10, wherein the chip recesses are formed to be recessed from the mounting surface in the height direction in areas between the mounting surface, and other section of the third cutting edges, which are adjacent to the second corner cutting edges, and the entire sections of the second corner cutting edges.

12. The cutting insert of claim 1, wherein the cutting portions are formed in a shape that is rotation-symmetrical by 180 degrees with respect to a central axis in the widthwise direction and a central axis in the lengthwise direction, and a central axis of the through-hole, and
wherein the lower surface is formed in a shape that is rotation-symmetrical by 180 degrees to the upper surface with respect to the central axis in the widthwise direction and the central axis in the lengthwise direction.

13. The cutting insert of claim 1, wherein heights of the pair of sub-side surfaces and the pair of main side surfaces are 48% to 52% of a distance between the second cutting edges formed to face each other on the upper surface.

14. The cutting insert of claim 1, wherein the first cutting edges and the third cutting edges are formed in convex curved shapes that have radii of curvature of 4.5 mm to 6.5 mm.
